# EUROPEAN PATENT APPLICATION

(11) **EP 4 741 238 A1**
(43) Date of publication of application: **13.05.2026**
(21) Application number: 25213529.8
(22) Date of filing: 05.11.2025
(51) Int. Cl.: B60T 17/00, B01D 53/26, B60T 17/02, F15B 21/048

(54) **PNEUMATIC SYSTEM**

(30) Priority: 06.11.2024 GB 202416366
(71) Applicant: AGCO International GmbH, 8212 Neuhausen am Rheinfall (CH)
(72) Inventor: ALBRECHT, Tobias, 87616 Marktoberdorf (DE); BOSL, Markus, 87616 Marktoberdorf (DE); KLAUS, Michael, 87616 Marktoberdorf (DE)
(74) Representative: AGCO Intellectual Property Department

(57) **Abstract**

A pneumatic system comprises a compressor and an air dryer for supplying a first set of consumers in a main circuit having multi-circuit protection valve system and at least one further consumer is a subsidiary circuit. A selection valve is used to control the coupling of the output of the air dryer to either the main circuit or the subsidiary circuit. The supply is provided to the subsidiary circuit only when a fluid pressure associated in the main circuit exceeds a threshold.

## Description

### FIELD

Embodiments of the present disclosure relate generally to pneumatic systems, in particular pneumatic supply systems, especially for industrial or utility vehicles, such as tractors, other agricultural vehicles, construction vehicles and others.

### BACKGROUND

Pneumatic air supply systems for vehicles typically comprise a compressor that provides a compressed air supply to a range of different pneumatic consumers (i.e., system hardware such as pneumatic actuators, pneumatic cylinders and pneumatic motors together with associated actuating valves and reservoirs/accumulators for storing a pressurized air supply for such equipment) on the vehicle and/or on an associated implement attached to or towed by the vehicle. Some consumers may be regarded as primary consumers whose operation is prioritized over other consumers that are regarded as secondary. Primary consumers may be safety critical, such as pneumatic brake systems, for example. Examples of secondary consumers include a pneumatic cab suspension system, pneumatic driver seat suspension system, pneumatic engine brake system and a tire pressure control system (TPCS).

It is known for a TPCS to have two circuits: a supply circuit which supplies air to the tires when being inflated, and a control circuit which is used to actuate valves to control the supply circuit. A TPCS may be used to deflate the tires (e.g. on a tractor) when a vehicle is used in a field as this improves grip and reduces soil compaction and to reinflate the tires to a higher pressure when the vehicle is driven on the road. With this arrangement, it is necessary to re-inflate the tires when transitioning from field use to road use. This needs to be done as quickly as possible, hence there is a need for a high flow rate but low-pressure air supply in the TPCS supply circuit whereas the control circuit requires a higher pressure but low flow rate supply.

Different consumers on a vehicle will often have different requirements in terms of flow rate and air pressure. Most consumers, including safety-critical pneumatic brake circuits, require a relatively low flow rate but high-pressure air supply. However, some consumers require a relatively high flow rate but a lower pressure. This is the case for example with the supply circuit of a TPCS through which air is introduced into the tires. In certain circumstances, meeting the demand of a high flow rate consumer can potentially impact on the ability of the pneumatic system to meet the demands of the primary consumers.

### BRIEF SUMMARY

The scope of this disclosure is defined by the claims.

According to examples in accordance with this disclosure, there is provided a pneumatic system according to claim 1. Further optional features are set out in the claims dependent on claim 1.

### BRIEF DESCRIPTION OF THE DRAWINGS

One or more embodiments of this disclosure will now be described, by way of example only, with reference to the accompanying drawings, in which:
FIG. 1 shows a tractor, as one example of a vehicle that can make use of the pneumatic system of this disclosure;
FIG. 2 shows a circuit diagram of part of a pneumatic supply system suitable for use in the vehicle of FIG. 1, the pneumatic system having a single Electrically Operated Air Dryer (EOD);
FIG. 3 shows the EOD of FIG. 2 operating in a loading mode;
FIG. 4 shows the EOD of FIG. 2 operating in a non-loading (idle) mode;
FIG. 5 shows the EOD of FIG. 2 in an overpressure protection mode;
FIG. 6 shows the EOD of FIG. 2 operating in a regeneration mode;
FIG. 7 shows a first example of a pneumatic system of this disclosure;
FIG. 8 shows a second example of a pneumatic system of this disclosure;
FIG. 9 shows a third example of a pneumatic system of this disclosure; and
FIG. 10 shows a fourth example of a pneumatic system of this disclosure.

### DETAILED DESCRIPTION

The subject matter of this disclosure will be described with reference to the Figures.

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a pneumatic system comprising a compressor and an air dryer system having an input coupled to the compressor and an output. A first set of consumers is provided in a main circuit comprising a multi-circuit protection valve system upstream of the consumers in the first set. At least one further consumer is provided in a subsidiary circuit. A consumer circuit selection valve is configured to control a coupling of the output of the air dryer system to either the main circuit or the subsidiary circuit. The consumer circuit selection valve is configured to couple the output of the air dryer system to the subsidiary circuit only when a fluid pressure in the main circuit exceeds a threshold.

This pneumatic system enables the at least one further consumer in the subsidiary circuit to be supplied only when the pressure in the main circuit is above a set threshold to protect operation of the first set of consumers in the main circuit, which usually includes at least one primary consumer. The consumers in the main circuit typically comprise consumers requiring a relatively high pressure but low flow rate air supply whereas the at least one further consumer is typically a secondary consumer requiring a relatively high flow rate but low-pressure air supply.

Before describing the concept of this disclosure, examples of the type of vehicle in which the pneumatic system may be used will be discussed, and the known operation of an EOD will be explained.

The pneumatic system of this disclosure may be applied to a vehicle alone (having pneumatically powered on-board equipment) or to a vehicle towing or attached to an associated implement. In the latter case, part of the pneumatic system may be in the main vehicle and part of the pneumatic system may be in the associated implement.

The pneumatic supply system of this disclosure is not limited to use on tractors or other agricultural vehicles or machines (such as combine harvesters, sprayers and the like) but can be adapted for use with any industrial or utility vehicle requiring a pneumatic air supply, including construction vehicles, trucks and lorries and others. Indeed, the pneumatic system of this disclosure can also be adapted for use in any pneumatic system whether on a vehicle or not.

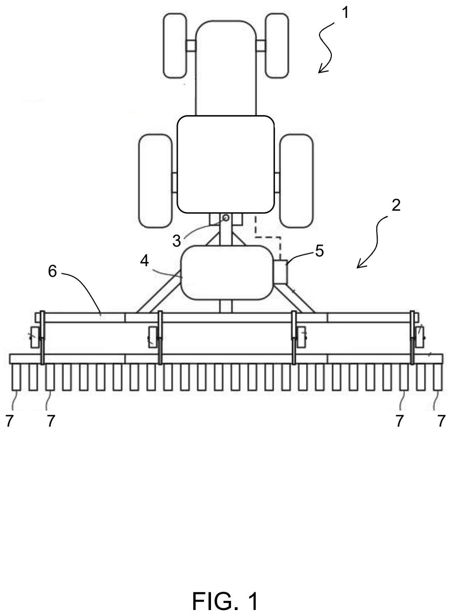

FIG. 1 shows an agricultural tractor 1, as one example of a vehicle that can make use of the pneumatic supply system of this disclosure. The tractor 1 is shown carrying an agricultural implement in the form of a planter 2, as one example of an associated implement. The tractor is coupled to the planter by a hitch 3. The planter comprises a seed tank 4 and a control system 5 which regulates delivery of seed to a number of row units 7 mounted to a tool bar 6.

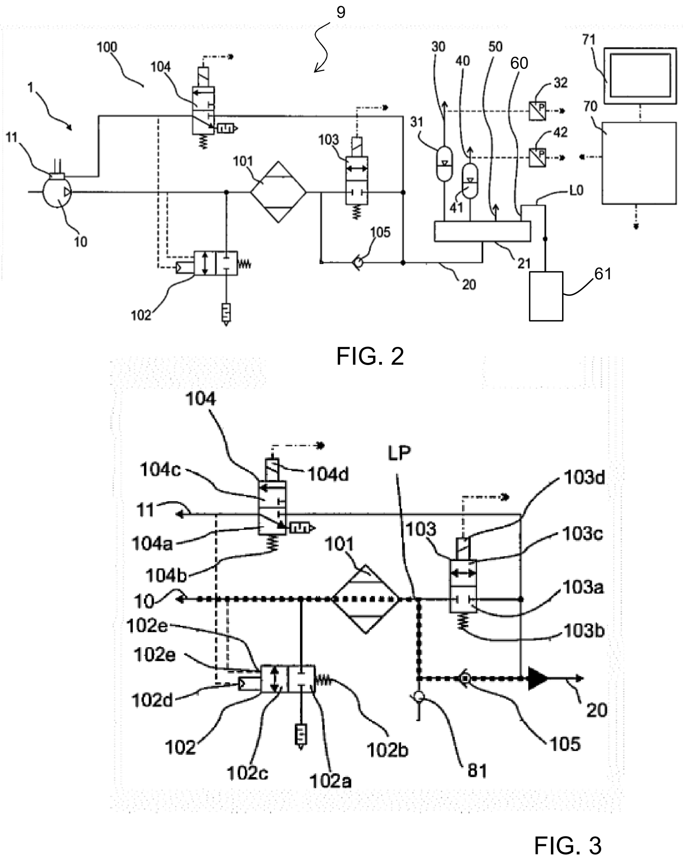

FIG. 2 shows a circuit diagram of a pneumatic supply system 9 having an Electrically Operated Air Dryer (EOD) 100, for example for mounting on a vehicle 1 such as the tractor 1.

A compressor 10 supplies air to components on the vehicle via the EOD 100. The EOD is connected to various consumers 30, 40, 50, 60 via a consumer branch 20 connected to an output of the EOD. In this example, the consumers 30, 40 are primary consumers and the consumers 50, 60 are secondary consumers. Reservoirs 31, 41 are assigned to the primary consumers 30, 40 and are equipped with pressure sensors 32, 42 to measure the pressure of the compressed air in the consumer branches. Consumers 50 or 60 may also be equipped with respective reservoirs and/or pressure sensors. Generally, the system will try to maintain the reservoirs at a defined pressure level, for example 8.5 bar (850 kPa) to 12.5 bar (1259 kPa), to ensure that they can deliver the required air pressure when required.

The consumer branch 20 is connected with the various consumers through a multi-circuit protection valve system 21. The multi-circuit protection valve system can take various forms and may be operative to balance the pressure required to be supplied to the primary set of consumers 30, 40 and the secondary consumers 50, 60 and/or to cut the supply to any consumer should a consumer develop a leak. In this way, the integrity of the supply to the remaining consumers is maintained. Furthermore, the multi-circuit protection valve system 21 may be configured to ensure that the supply to the primary consumers is prioritized over the supply to secondary consumers, such as a tire pressure control system, TPCS, 61.

By way of example, in vehicles including tractors or trucks, primary consumers 30 and 40 may be parallel brake circuits for a dual-circuit service brake. Secondary consumers 50, 60 may be a parking brake, an air suspension of the cab and/or wheels, or the TPCS 61, for example.

Compressor 10 is equipped with idler means 11 to provide an idle mode in which the air flow is reduced to a rate of, for example, 15% of the maximum air delivery, which in a non-limiting example may be in the region of 400 to 1000 liters per minute. Alternatively, this efficiency idle function may be provided by an OFF/ON clutch cutting mechanical drive of compressor 10. Furthermore, the compressor 10 may be electrically driven and the electric supply may be switched off by idler means 11.

The EOD 100 comprises a dryer unit 101 comprising a cartridge filled with drying granules (desiccant), a discharge valve 102, a regeneration valve 103, a governor valve 104, and a one-way output check valve 105. The system has an electronic control unit 70, which may be a computer or CPU. For clarity reasons, the electric connections of valves 102, 103 and 104 to the control unit 70 are only indicated by the dashed arrows. The control unit is coupled to a display 71. The regeneration valve 103 is connected in parallel to the output check valve 105 between the output of the dryer unit 101 and the consumer branch/output of the EOD 100.

The granule cartridge extracts water from the air passing through it in a first direction from the compressor to the consumers.

With reference to FIGs. 3 to 6, standard operating modes of the pneumatic system are now explained:
FIG. 3 shows a loading or drying mode.

When air is required to be supplied to the consumer branch 20, air from compressor 10 flows to the consumer branch 20 in a first direction through dryer unit 101 and check valve 105 as shown by the dotted path LP. During loading, discharge valve 102 is in its closed position 102a biased by spring 102b, as shown in FIG. 3. The regeneration control valve 103 and governor valve 104 are also in their closed positions 103a and 104a biased by springs 103b and 104b. Air flow in an opposite direction, that is from the consumer branch 20 to compressor 10, is prohibited by check valve 105 and the closed regeneration valve 103.

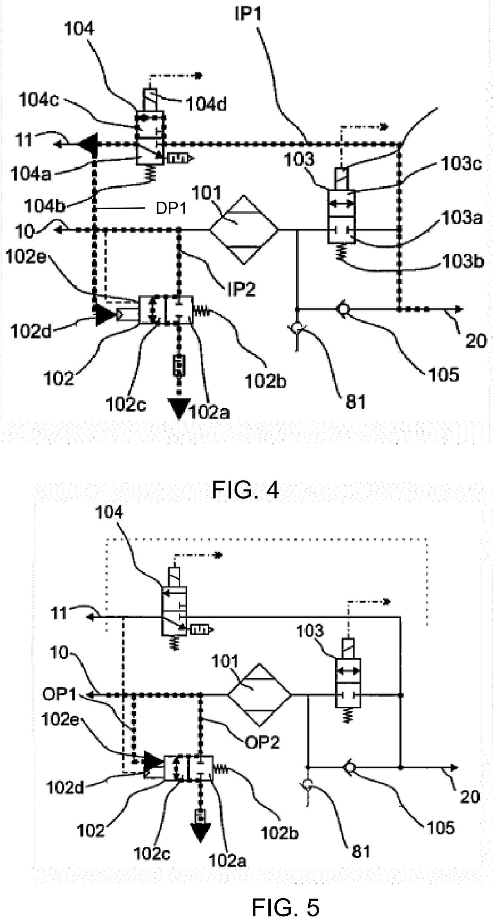

FIG. 4 shows a non-loading, idle mode. This will also be referred to as a holding mode.

If the consumers are provided with sufficient air pressure, the pressure in the reservoirs 31, 42 may be in the range of about 8.5 bar (850 kPa) to 12.5 bar (1259 kPa) in this non-limiting example. This pressure is measured by sensors 32, 42 in reservoirs 31, 41. If this pressure is exceeded because compressor 10 is still working, the control unit 70 switches the governor valve 104 from a closed position 104a (biased by spring 104b) to an open position 104c by energizing solenoid 104d to guide air along path IP1 from the consumer branch 20 through an output port of the governor valve to the compressor idler 11. The output port of the governor valve 104 is also connected to a pilot port 102d of the discharge valve 102 via path DP1 so that when the governor valve is in the open position 104c, the discharge valve 102 is moved to its open position 102c for connection of the EOD inlet, and hence the compressor output, to the atmosphere. Thereby any remaining air flow from the compressor (which may be approximately 15% of the maximum air flow of the compressor) is discharged to the atmosphere with minimum resistance via discharge valve 102 along path IP2. The open position 104c of the governor valve will also be referred to as a venting position as it is the position the valve 104 is in when it actuates the discharge valve 102 to vent the EOD input to atmosphere.

The compressor idler 11 keeps the compressor 10 in this energy saving mode as long as pressure is applied. For normal operation, the compressor idler 11 must be connected to the atmosphere and this is done through governor valve 104 when in closed position 104a.

FIG. 5 shows an overpressure protection mode.

If the pressure in the EOD inlet rises to a level above a permitted operating pressure, discharge valve 102 is opened via path OP1 so that the connection of the EOD inlet and compressor 10 to the atmosphere is opened (indicated by path OP2). This function is a safety function when the electronic control fails, or a blockage occurs which would also result in an incorrect pressure detection at pressure sensors 32,42. In a non-limiting example, the discharge valve 102 may be arranged to connect the EOD inlet to atmosphere when the pressure in the EOD inlet rises to around 19 bar (1900 kPa).

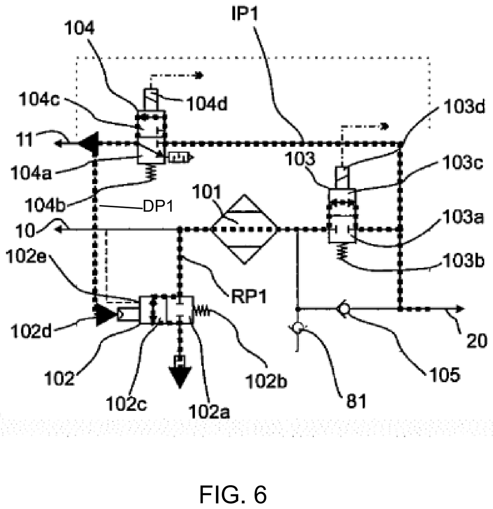

FIG. 6 shows a non-loading, regeneration mode.

The granules in the cartridge of dryer unit 101 can be regenerated by passing a purgative air flow through the cartridge in the reverse direction. Regeneration through the cartridge of dryer unit 101 may be achieved by using air from consumer reservoirs 31, 41 or any other reservoir connectable in a similar manner. For example, the EOD 100 may be provided with its own regeneration reservoir. Governor valve 104 is opened to position 104c first so that the compressor 10 is brought into the idle mode (as explained above for the idle mode) and air flows along path IP1. In addition, regeneration valve 103 is moved from its closed position 103a (biased by spring 103b) to the open position 103c by energizing solenoid 103d so that air from the consumer branch 20 (or other source of air used for regeneration) can by-pass the check valve 105 and enter the cartridge of dryer unit 101 along path RP1 to pass through the dryer unit in the opposite direction to the first direction. As discharge valve 102 is already opened to position 102c via path IP1, DP1 and port 102d, the air regenerating the dryer unit cartridge 101 and any air coming from the compressor 10 in the idle mode is discharged to the atmosphere.

This disclosure relates to the a pneumatic system for supplying multiple consumers (i.e., equipment requiring a pneumatic supply such as pneumatic actuators, pneumatic cylinders, pneumatic motors and reservoirs or accumulators for storing a pressurized air supply for such equipment), wherein different consumers have different levels of priority, so that primary consumers have a greater need for an uninterrupted supply of pressurized dried air than secondary consumers and different consumers have different requirements in terms of flow rate and pressure of the air supply.

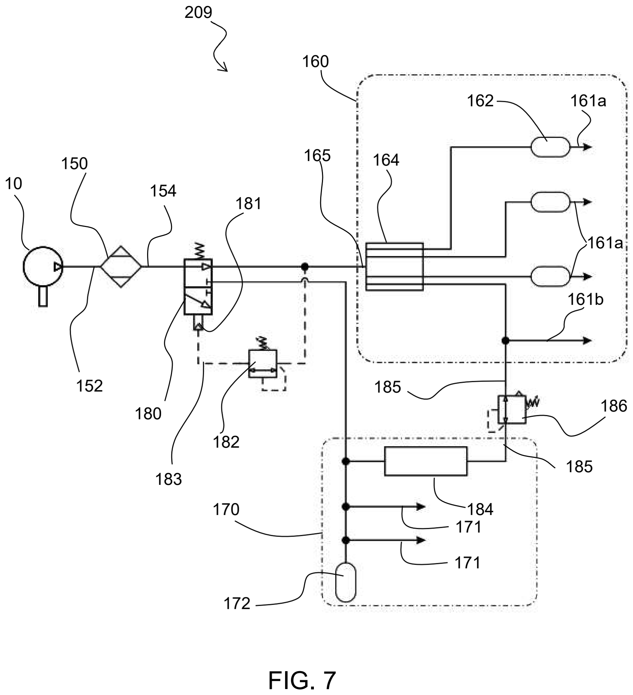

This disclosure provides a pneumatic system, a first example 209 of which is shown in FIG. 7. The pneumatic system 209 comprises a compressor 10, and an air dryer system 150 shown schematically as dyer unit 150. The air dryer system has an input 152 coupled to the compressor and an output 154 configured to be coupled to a variety of pneumatic consumers 161a, 161b, 171.

The air dryer system 150 may include any suitable air dryer for the system which may be a regenerative air dryer such as twin chamber air dryer or at least one EOD of the type described above in relation to FIGs. 2 to 6.

The consumers are arranged in a first set 161a, 161b connected in a main circuit 160 which includes a multi-circuit protection valve system 164 upstream of the consumers 161a, 161b in the first set. Some or all of consumers of the first set may have an associated reservoir or accumulator 162. At least some of the consumers of the first set may be primary consumers 161a whose function is prioritized. The primary consumers may have a safety critical function and might include pneumatic brake systems, for example. However, one or more of the consumers supplied via the main circuit may be secondary consumers 161b.

The multi-circuit protection valve system 164 is provided in the main circuit 160 upstream of the consumers 161a, 161b. The multi-circuit protection valve system 164 outputs to a number of sub-circuits to supply the various consumers 161a, 161b of the first set. In the example shown, there are four sub-circuits. Each sub-circuit may supply more than one consumer. For example, there may be multiple secondary consumers 161b supplied via the same sub-circuit. The multi-circuit protection valve system 164 is operative to balance the pressure required to be supplied to the primary consumers 161a and the secondary consumers 161b in the main circuit and/or to cut the supply to any of these consumers should the consumer or its associated sub-circuit develop a leak. In this way, the integrity of the supply to the remaining consumers in the main circuit is maintained. Furthermore, the multi-circuit protection valve system may be configured to ensure that the supply to the primary consumers 161a is prioritized over the supply to secondary consumers 161b of the first set. Examples of multi-circuit protection valve systems are disclosed in GB1387892 to Robert Bosch GmbH and GB1563144A to WABCO Westinghouse GmbH.

The pneumatic system includes at least one further pneumatic consumer 171 connected in a subsidiary circuit 170 and a consumer circuit selection valve 180 for controlling the coupling of the output 154 of the air dryer system 150 upstream of the multi-circuit protection valve system 164 to either the main circuit 160 or the subsidiary circuit 170. The consumer circuit selection valve 180 is configured to couple the output 154 of the air dryer system to the subsidiary circuit 170 only when a pressure associated with main circuit 160 exceeds a threshold.

The consumers 161a, 161b in the main circuit generally require high pneumatic pressure but low flow rates and include primary consumers 161a that may be safety critical and hence have priority over the secondary consumers. Generally, the system will try to maintain the reservoirs 162 in the main circuit above a defined pressure level, for example 8.5 bar (850 kPa) to 12.5 bar (1259 kPa), to ensure that they can deliver the required air pressure to the primary consumers161a when required.

The second set 170 of consumers is only supplied by the compressor 10 when the main circuit 160 has a sufficient pressure. Thus, the selection valve 180 prioritizes the supply to the consumers 161a, 161b, 162 in the main circuit 170 over those 171, 172 in the subsidiary circuit 170. The further consumers 171 in the subsidiary circuit will generally be consumers that require a relatively high flow rate but low pressure and will usually be secondary consumers.

In a non-limiting example, compressor 200 may be configured to supply the main circuit 160 at a pressure in the region of 8.5 bar (850 kPa) to 12.5 bar (1259 kPa) with an air flow of 200 to 250 I/min at engine idle speed and 400 I/min at nominal engine speed and to supply the subsidiary circuit 170 at a flow rate of 800-1000l/min at a pressure in region of 2.5 bar (250 kPa) to 3 bar (300 kPa).

The selection valve 180 either couples the output of the air dryer system to the input 165 of the multi-circuit protection valve system 164, and hence to the first set of consumers 161a, 161b in the main circuit, or to the secondary circuit 170 and the further consumers 171.

In the example of FIG. 7, the selection valve 180 comprises a pneumatically pilot controlled valve. It has a pilot port 181, wherein a pilot pressure control line 183 to the pilot port of the selection valve 180 is coupled to the input 165 to the multi-circuit protection valve system 164. When the pressure received by the multi-circuit protection valve system 164 at the input 165 exceeds a threshold (e.g., when the reservoirs 162 are fully charged) the compressor supply is switched to the subsidiary circuit 170. This threshold is implemented by a relief valve 182 that opens only when the pressure in the main circuit is at or above the threshold value, which in a non-limiting example may be 12 bar (1.2 MPa).

This example is thus a wholly pneumatic valve arrangement in which the selection valve 180 is spring biased to a first position in which the air supply is directed to the main circuit 160 but is pneumatically pilot controlled to move to a second position to supply the subsidiary circuit when the pressure at the control line is at or above the threshold value. The relief valve 182 opens when the pressure in the supply line 183 is at the set value. The relief valve thus operates as a back pressure relief valve.

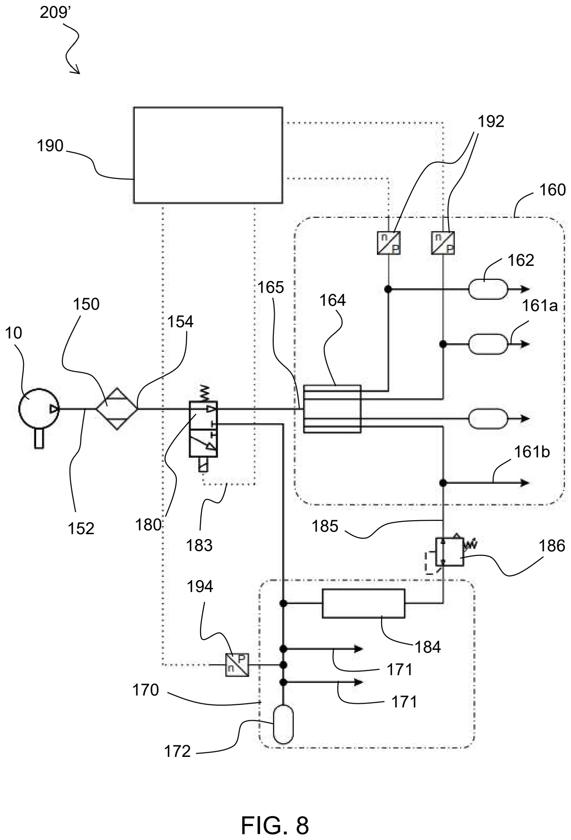

FIG. 7 also shows a particular implementation of a TPCS having supply circuit and a control circuit comprising a valve manifold 184 for controlling the supply circuit. The supply circuit is connected as one of the further consumers 171 in the subsidiary circuit 170 as this requires a relatively high flow rate but low pressure. However, the control circuit requires a higher pressure but low flow rate air supply. To meet this requirement, a valve manifold supply pressure is provided from one of the sub-circuits in the main circuit through a line 185 and pressure regulating valve 186, for example with a 5 bar (500 kPa) pressure setting. In an embodiment, the valve manifold supply pressure is taken from a sub-circuit of the main circuit which supplies one or more subsidiary consumers 161b, so that the primary consumers 161a remain protected by the multi-circuit valve protection system 164. This implementation of a TPCS is also shown in the embodiments of FIGs. 8, 9 and 10 discussed below but will not be described in detail again.

The TPCS is for example used to deflate the tires (e.g. on a tractor) when used in a field as this improves grip and reduces soil compaction and to re-inflate the tires to a higher pressure for use on the road. With this arrangement, it is necessary to re-inflate the tires when transitioning from field use to road use. This needs to be done as quickly as possible, hence the need for a high flow in the supply circuit. The TPCS may also control tire pressures on an associated implement attached to the tractor or the subsidiary circuit could be used to supply air to a tire pressure control system of an implement, especially a planter.

An example of a pneumatic supply system on a vehicle having an EOD used in combination with a TPCS of the type shown in FIG.7 can be found in EP3127721A1 to AGCO International GmbH published 8th February 2017.

The advantage of a fully pneumatic selection valve arrangement 180 is that it requires no electronic control. However, the compressor will be connected to the subsidiary circuit 170 whenever the pressure in the main circuit 160 is at the threshold value even if there is no demand in the subsidiary circuit.

FIG. 8 shows a second example 209' of a pneumatic system. In the example of FIG. 8, the selection valve 180 comprises an electrically controlled valve, and the system comprises an electronic valve controller 190 and at least one pressure sensor 192 associated with at least one of the consumers 161a of the first set of consumers for providing a sensed pressure to the valve controller 190. In this way, the selection valve 180 is electrically controlled using an electrical connection 183, which may be wired or wireless, in dependence on a sensed pressure at the first set of consumers. The pressure sensor will usually be associated with one of the primary consumers 161a.

In the example shown, the controller receives data on the pressure relating to two of the primary consumers in the main circuit from two pressure sensors 192. These are for example connected to two primary protected brake circuits and should read the same pressure unless there is a fault and thus, they provide for redundancy.

A further pressure sensor 194 is also shown associated with further consumers 171 in the subsidiary circuit 170, to provide pressure data from the subsidiary circuit. The controller 190 actuates the selection valve 180 to open the supply to the subsidiary circuit only when the pressure in the main circuit is at the required level and only when there is a demand in the subsidiary circuit. The controller 190 can take into account other operating parameters to determine when to connect the subsidiary circuit to the compressor based on other inputs as part of an overall control system of the vehicle. This enables a more nuanced control of the selection valve and the pneumatic system as a whole.

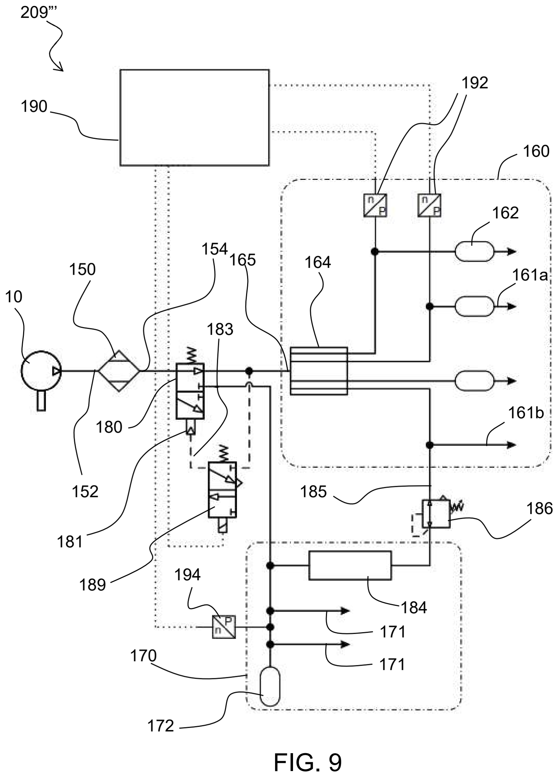

FIG. 9 shows a third example 209" of a pneumatic system. In the example of FIG. 9, the selection valve 180 comprises a pneumatically controlled valve as described above with reference to FIG. 7, and an electrically controlled valve 189. This electronically controlled valve 180 is controlled by the valve controller 190 in dependance in inputs from the various pressure sensors 192, 194 and other inputs as described with the previous embodiment. This provides a combination of the concepts of the embodiments of FIGs. 7 and 8.

The electronically controlled solenoid valve 189 is used to connect the pilot port 181 to the supply line to the main circuit 160 instead of the pneumatic relief valve 182 in the embodiment of FIG. 7. The solenoid valve 189 is only actuated if the pressure in the main circuit is sufficiently high and there is a demand in the subsidiary circuit. This enables use of a tested and proven pneumatically controlled valve as the selection valve 180 but with the addition of electronic control. The use of an electrical valve 189 to pilot control actuation of the selection valve 180 means the selection valve can be switched independently from a defined pressure value, but instead when a pressure value parameterized in the software is reached. Beside this, pneumatic valves always have hysteresis (difference in pressure for opening and closing) so that a pneumatic relief valve 182 may not always be able to switch supply into main circuit 160 fast enough so that the primary consumers could be undersupplied. Accordingly, use of an electronically controlled valve 189 to pilot control the selection valve 180 may be preferred in certain applications.

As mentioned above, the air dryer system 150 may comprise an electrically operated single chamber air dryer or a double chamber air dryer.

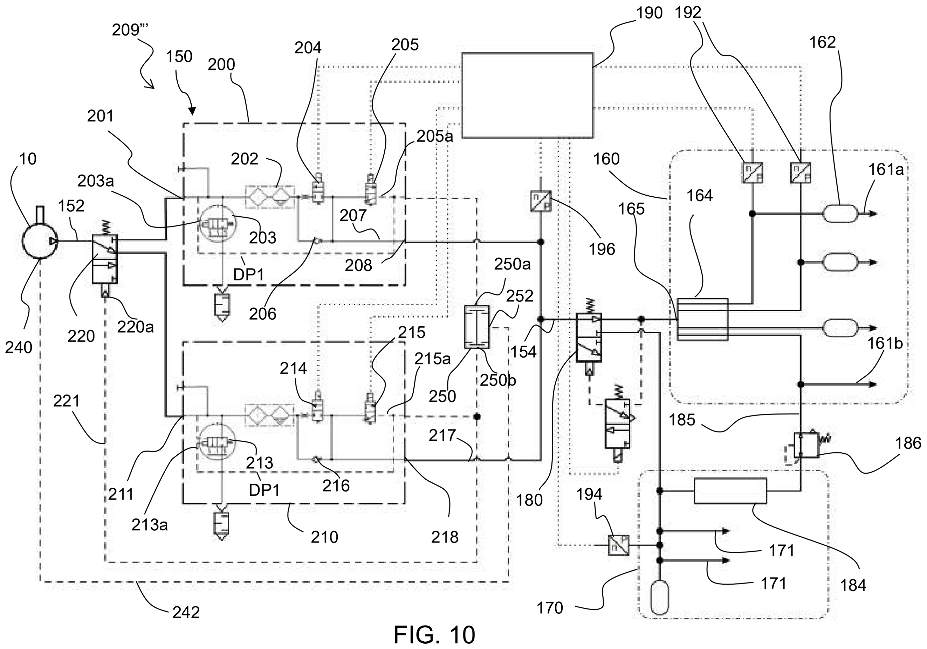

FIG. 10 shows a fourth example 209‴ of a pneumatic system. In the example shown in FIG. 10, the air dryer system 150 includes a first EOD 200 and a second EOD 210, each having an input 201, 211 which can be alternately coupled to the input 152 to the air dryer system, and hence to the compressor 10, through an air dryer selection valve 220. The air dryer selection valve 220 couples the input of either the first EOD or second EOD to the compressor output.

The EODs each have an output 208, 218 forming part of a consumer branch 207, 217. The consumer branches 207, 217 and outputs 208, 218 of the two EODs are fluidly connected to each other to form the output 154 of the air dryer system 150 and to the consumers through a main circuit 160 and a subsidiary circuit 170 in the same way as the output 154 of the air dryer systems as shown in FIGs. 7 to 9. FIG. 10 shows a consumer circuit selection valve arrangement similar to that described above in relation to FIG. 9. However, the consumer circuit selection valve arrangements shown in either of FIGs. 7 or 8 could be adopted in the alternative.

In one example, each EOD 200, 210 has a structure and operation similar to that explained above for a single EOD system with reference to FIGs. 2 to 6.

Thus, as shown for the first EOD 200, there is a dryer unit 202 comprising a cartridge filled with drying granules, a discharge valve 203, a regeneration valve 204, a governor valve 205 and an output valve (check valve) 206. The discharge valve 203 is for selectively coupling an input 201 to the first EOD 200 to the atmosphere and is thus between an input side of the dryer unit 202 and a vent to the atmosphere.

The one-way output check valve 206 is located between an output to the dryer unit and a consumer branch 207 leading to an output 208 of the EOD which is fluidly connected to the sets of consumers as explained above. In addition, the output side of the dryer unit 202 is fluidly connected to the consumer branch 207 and EOD output 208 through the regeneration valve 204 in parallel to the output check valve 206. The regeneration valve 204 is thus capable of selectively coupling the consumer branch 207 and the EOD output 208 to the output of the dryer unit to allow a flow through the dryer unit in a reverse direction for regeneration. The governor valve 205 has an input port fluidly connected to the consumer branch 207 and the EOD output 208 and an output port 205a fluidly coupled to a pilot port 203a of the discharge valve 203, as indicated by the dashed line DP1.

The electric connections of valves 204 and 205 to the control unit 70 may be wired or wireless.

The second EOD 210 is similarly constructed having a dryer unit 212 comprising a cartridge filled with drying granules, a discharge valve 213, a regeneration valve 214, a governor valve 215, and an output valve (check valve) 216. The discharge valve 213 is for selectively coupling an input 211 to the second EOD to the atmosphere and is thus between an input side of the dryer unit 212 and a vent to the atmosphere. A consumer branch 217 of the second EOD leads to an output 218 of the second EOD and is fluidly coupled to the sets of consumers as explained above.

An additional pressure sensor 196 is shown for measuring the pressure at the coupled outputs 208, 218 of the two EODs, that is to say at the output 154 of the air dryer system.

The second EOD 210 is constructed and operated in a similar manner to the first EOD 200 as described above, to which the reader should refer.

In each of the first and second EODs 200, 210, the respective discharge valve 203, 213, regeneration valve 204, 214, governor valve 205, 215, and one-way output check valve 206, 216 correspond to and perform similar functions to the discharge valve 102, regeneration valve 103, governor valve 104, and output check valve 105 in the known single EOD system described above in relation to FIGs. 2 to 6.

As explained above, each EOD 200, 210 can be operated in a loading mode in which the compressor is driven in a drive mode and compressed air is driven through the dryer unit to the one or more consumers and non-loading modes, which include a holding mode and a regeneration mode.

The compressor 10 has an energy saving idle mode which is used when the system pressures are such that operation of the compressor is not needed. In the idle mode, the compressor 10 is switched to an idle state. The compressor may be turned off in the idle state, but it may remain partially actuated delivering a lower pressure and air flow than when being driven to provide air to the consumers through one of the EODs 200, 210.

The idle mode of the compressor 10 is triggered by a fluid (air) pressure to an idle control port 240. A fluid pressure control line 242 is coupled to the idle control port 240.

There are many compressor designs with an energy saving idle mode. For example, most two-cylinder compressors use the pressure in an energy saving pipe to open a valve between the two cylinders. Air is no longer compressed, and output is instead only cycled between the two cylinders.

In one-cylinder compressors, the pressure in an energy saving pipe may be used to open a valve, so that air is no longer compressed but is exhausted to atmosphere.

Another possibility is a separate valve between a cylinder and the suction port. Pressure in an energy saving pipe opens this valve and air in the cylinder will flow back to suction port.

For generating the pressure supplied along the pressure control line 242 to the idle control input port 240 of the compressor, a pneumatic logic circuit may be used as illustrated. In the embodiment shown, the pneumatic logic circuit comprises a pneumatic AND logic control valve 250 having an output 252 coupled to the idle control input port 240 by the pressure control line 242. The control valve 250 has two inputs 250a, 250b. The output port 205a, 215a of the governor valve 205, 215 of each of the first and second EODs 200, 210 is fluidly coupled to a respective one of the inputs 250a, 250b of the control valve 250. Thus, each input pressure is high when the respective governor valve 205, 215 is opened to actuate its associated discharge valve 203, 213 during a non-loading mode of operation of the respective EOD and is low when the respective EOD is operating in a loading mode and the governor valve 205, 215 is closed.

The control valve 250 is designed to deliver a pressure which places the compressor into the energy saving idle mode only when both the first and second EODs are operating in a non-loading mode, namely when both inputs are high.

The idle mode of the compressor is thus used when both air dryers are in a non-loading mode and no compressed air is being provided to any of the consumers. The use of pneumatic logic control simplifies the control system and avoids the need for an additional electrical control signal for the compressor mode control. The use of pneumatic logic control is also less prone to error and so provides for increased safety levels.

The control valve 250 functions as a pneumatic AND logic valve. The valve will only produce an output fluid pressure signal at the output 252 for transmission to the compressor idle control port 240 when there is a fluid pressure at both inputs 250a, 250b to the control valve (i.e., when both governor valves 205, 215 are in the open, venting position). The control valve 250 forwards the lowest of the fluid pressures at the inputs 250a, 250b to the output 252. When both governor valves 205, 215 are in the open position, they will forward the same pressure to the two control valve inlets 250a, 250b as they are fluidly connected, and this pressure will be forwarded to the output 252 and hence to the compressor idle control port 240. When a governor valve 205, 215 is in its closed position, its output port 205a, 215a is connected to atmosphere so that no fluid pressure is retained in the lines to the respective input 250a, 250b of the control valve 250 or the pilot port 203a, 213a, of the respective discharge valve 203. Since control valve 250 forwards the lowest fluid pressure present at either of the inlets 250a, 250b to the output 252, when at least one of the governor valves 205, 215 is in the closed position so that its output port 205a, 215a is vented to atmosphere, the output 252 of the control valve 250 and the control line 242 to the idle control port 240 will also be vented to atmosphere so that the compressor 10 will not be idled.

If the pressure sensor 196 indicates that both the main and subsidiary circuits have reached their target operating pressures, that is to say there no pneumatic demand in either the main or subsidiary circuits, both governor valves 205, 215 are switched to the open, venting position resulting in idling of the compressor 10. Since the discharge valve 203, 213 of both EODs will be actuated to connect the EOD inputs to atmosphere, any reduced output from the compressor will be vented to atmosphere through the discharge valve of whichever EOD is coupled to the compressor by the air dryer selection valve 220.

Pressure sensor 196 generally determines a similar pressure to the sensors 192. However, the sensors 192 when connected with pneumatic braking circuits may show greater tolerances or be impacted by brake actuation, resulting in temporary pressure drops. Accordingly, the sensor 196 may provide more precise control of the compressor idle mode and/or actuation of the selection valve 180. However, pressure sensor 196 could be omitted and readings from the pressure sensors 192 used to control idling of the compressor and the selection valve 180. A similar pressure sensor 196 upstream of the multi-circuit protection valve system 21 can be adopted in the embodiments of FIGs. 8 and 9 described above to provide an input to the valve controller 190 for control of the selection valve 180.

The pneumatic logic arrangement avoids the compressor being idled by one governor valve alone. The control valve 250, with two fluid pressure inputs 250a, 250b is used as a purely pneumatic logic solution to idle the compressor only when both governor valves 205, 215 are in the open, venting position. This avoids the need for any internal changes to the EODs. Other pneumatic AND logic valve arrangements could be adopted to forward a pressure signal to idle the compressor only when both governor valves 205, 215 are in the open, venting position. For example, one alternative logic circuit may comprise two pneumatically piloted 2/2 way valves (two ports/two positions) arranged in series between a fluid pressure source and the compressor idle control port 240, with the pilot port of each valve being fluidly connected to the output port 205a, 215a of a respective one of the governor valves 205, 215. When both governor valves are in the open position, the pilot port of both valves is pressured so that the two valves open to forward a fluid pressure signal to the idle control port 240.

The non-loading modes of operation for each EOD 200, 210 include a holding mode in which the governor valve 205, 215 is in the open position but the regeneration valve 204, 214 is closed, and a regeneration mode in which both the governor valve 205, 215 and the regeneration valve 204, 214 are both in the open position. When an EOD is being operated in a regeneration mode, air for regeneration may be provided from the consumers and/or from the other EOD if it is being operated in a loading mode. When an EOD 200, 210 is being operated in a holding mode, air pressure is provided at the output port 205a, 215a of the governor valve to open the discharge valve 203, 213, but air is not allowed to flow in the reverse, second direction through the dryer unit 202, 212.

The compressor 10 can be placed in idle mode when both EODs are being operated in a holding mode, or both are being operated in a regeneration mode, or when one is being operated in a holding mode and the other in a regeneration mode. The two EODs may both be operated in a holding mode when the air pressure in the consumers is sufficiently high that no further air need be provided by the compressor but where neither EOD 200, 210 requires regenerating.

Rather than applying a pneumatic pressure to a pilot port 240 of the compressor, the compressor could be idled by using the idle pressure signal to acuate a clutch to disengage drive to the compressor or to otherwise switch the compressor off. For example, if the compressor is driven by a hydraulic or electric motor, the idle pressure signal could be used to stop the motor.

In the example shown, the air dryer selection valve 220 is a pneumatically controlled valve having a pilot control port 220a is fluidly coupled to the output port 205a, 215a of the governor valve 205, 215 of one of the EODs 200, 210. In the embodiment shown, the pilot port 220a of the air dryer selection valve 220 is fluidly coupled to the output port 215a of the governor valve 215 of the second EOD 210 by line 262. The section valve 220 is biased by a spring to couple the output of the compressor 10 (the input 152 of the air dryer system 150) to the second EOD 210 in a default setting as shown in FIG. 10. When the second EOD 210 is operated in a non-loading mode, say because it requires regeneration, the governor valve 215 of the second EOD 210 is moved to the open venting position which, in addition to actuating the discharge valve 213 and sending a pressure signal to one of the inputs 250b of the control valve 250, will forward a pressure to the pilot port 220a of the section valve 220 moving the valve against the spring bias so that the first EOD 200 is fluidly coupled to the compressor output. The first EOD 200 can then be operated in a loading mode to dry air forwarded from the compressor 10 to the consumers. The second EOD can be operated in a holding mode or in a regeneration mode if the regeneration valve 214 is opened.

If the second EOD 210 is subsequently to be operated in a loading mode, say when regeneration of the first EOD 200 is required whilst there is a consumer demand, the governor valve 215 of the second EOD 210 is moved to the closed position so that its output port 215a and the fluid line 262 to the air dryer selection valve pilot port 220a is vented to atmosphere. The air dryer selection valve 220 will then be biased by its spring to the default position so that the second EOD 210 is again coupled to the output of the compressor. When both EODs 200, 210 are operated in a non-loading mode, the pressure signal from the governor valve 215 of the second EOD 210 will hold the air dryer selection valve 220 so that the first EOD 200 is fluidly coupled to the compressor 10 and any output from the compressor will be vented to atmosphere through the discharge valve 203 of the first EOD.

It will be appreciated that the above arrangement could be reversed, with the output port 295a of the governor valve 205 of the first EOD 200 fluidly coupled to the pilot port 220a of the air dryer selection valve 220 and the air dryer selection valve biased by its spring to connect the first EOD to the compressor output in a default position.

The air dryer selection valve 220 could alternatively be an electronically controlled valve whose actuation is controlled by the valve controller 190 or any other suitable valve arrangement.

The arrangement of this disclosure reduces the risk of a primary pneumatic consumer, such as a brake system circuit, being under supplied. The pressure level in the subsidiary circuit will drop in response to a demand of the one or more further consumers 171, and the air flow to the subsidiary circuit will then be increased (if supply is available and not needed by the main circuit). For example, the tire pressure control circuit filling time may be reduced. Of course, if the demand in the primary consumer circuit is high so that the compressor cannot meet the demands of the main circuit and the subsidiary circuit, it may occur that consumers in the subsidiary circuit are not supplied.

By way of example, the first set of consumers 161a, 161b may comprise one or more selected from the following list:
rear service brake;
front service brake;
park brake;
trailer brake.

The further consumers 171 in the subsidiary circuit may comprise one or more selected from the following list:
tire pressure control system;
cab air supply;
dust discharge system.

The multi-circuit protection valve system 280 for example comprises multiple circuits, e.g. four circuits. Different circuits may operate at different pressures and may be associated with their own reservoirs. For example, the rear service brake, front service brake, park/trailer brake may each be supplied by a separate circuit. The fourth circuit may then supply the secondary consumers.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the subject matter of this disclosure, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A pneumatic system, comprising:
a compressor (10);
an air dryer system (150) having an input (152) coupled to the compressor and an output (154);
a first set of consumers (162) in a main circuit (160) comprising a multi-circuit protection valve system (164) upstream of the consumers (162) in the first set;
at least one further consumer (172) in a subsidiary circuit (170); and
a selection valve (180), wherein the selection valve (180) is configured to control a coupling of the output (154) of the air dryer system (150) to either the main circuit (160) or the subsidiary circuit (170) and wherein the selection valve (180) is configured to couple the output of the air dryer system to the subsidiary circuit (170) only when a fluid pressure in the main circuit (160) exceeds a threshold.

2. The pneumatic system of claim 1, wherein the selection valve (180) comprises a pneumatically pilot controlled valve, wherein a pilot pressure control line (183) to the selection valve is coupled to an input (165) to the multi-circuit protection valve system (164) in the main circuit (160).

3. The pneumatic system of any one of claims 1, wherein the selection valve (180) comprises pneumatically pilot controlled valve, wherein a pilot pressure control line (183) to a pilot port of the selection valve (180) is selectively coupled to an input to the multi-circuit protection valve system (164) through an electrically controlled valve (189).

4. The pneumatic system of claim 1, wherein the selection valve (180) comprises an electrically controlled valve.

5. The pneumatic system of claim 3 or claim 4, wherein the system comprises a valve controller (190) for controlling operation of the electronically controlled valve (180; 189) and at least one pressure sensor (192, 196) associated with at least one of the consumers in the main circuit (160) for providing a sensed pressure to the valve controller (190).

6. The pneumatic system of any one of claims 1 to 5, wherein each consumer of the first set (160) of consumers has a lower maximum air flow demand than each consumer of the second set (170) of consumers.

7. The pneumatic system of any one of claims 1 to 6, wherein the air dryer (150) system comprises a single electrically operated air dryer, the air dryer comprising a dryer unit and a regeneration system.

8. The pneumatic system of any one of claims 1 to 6, wherein the air dryer system (150) comprises a double chamber air dryer.

9. The pneumatic system of any one of claims 1 to 6, wherein the air dryer system (150) compromise two electrically operated air dryers (200, 210) each having an output coupled to the air dryer system output (154) and each having a input (201, 211), the air dryer system (150) including an air dryer selection valve (220) for selectively coupling the input (201, 211) of either a first of the electrically operated air dryers (200) or a second of the electrically operated air dryers (210) to the air dryer system input (152).

10. A vehicle comprising:
the pneumatic system of any one of claims 1 to 9; and
the one or more consumers that are supplied by the pneumatic system.

11. The vehicle of claim 10, wherein the first set of consumers comprises one or more selected from the following list:
rear service brake;
front service brake;
park brake;
trailer brake.

12. The vehicle of claim 10 or 11, wherein the second set of consumers comprises one or more selected from the following list:
tire pressure control system (184);
cab air supply;
dust discharge system.

13. The vehicle of claim 12, wherein the tire pressure control system comprises a supply circuit through which air is provided to at least one tire of the vehicle and a control circuit having a valve manifold for controlling the supply circuit, and wherein a valve manifold supply pressure (185) is provided from the main circuit, through a pressure regulating valve (186).

14. The vehicle of any one of claims 10 to 13 comprising an agricultural vehicle, or a combination of an agricultural vehicle and an associated implement.
